# EUROPÄISCHE PATENTSCHRIFT

(11) **EP 2 237 848 B1**
(45) Veröffentlichungstag und Bekanntmachung des Hinweises auf die Patenterteilung: **20.08.2014**
(21) Anmeldenummer: 09707211.0
(22) Anmeldetag: 30.01.2009
(51) Int. Cl.: B01D 35/14, B01D 46/00

(54) **FILTER MIT EINEM DATENSPEICHER MIT ANTENNE ZUR SIGNALÜBERTRAGUNG**
FILTER WITH DATA STORAGE PROVIDED WITH AN ANTENNA FOR TRANSMITTING SIGNALS
FILTRE COMPORTANT UNE MÉMOIRE DE DONNÉES POURVUE D'UNE ANTENNE POUR LA TRANSMISSION DE SIGNAL

(30) Priorität: 07.02.2008 DE 102008009242
(43) Veröffentlichungstag der Anmeldung: 13.10.2010
(73) Patentinhaber: Hydac Filtertechnik GmbH, 66273 Sulzbach/Saar (DE)
(72) Erfinder: KREIBIG, Micha, 66780 Rehlingen-Siersburg (DE); SANN, Norbert, 66292 Riegelsberg (DE)
(74) Vertreter: Crazzolara, Helmut
(86) Internationale Anmeldenummer: PCT/EP2009/000603
(87) Internationale Veröffentlichungsnummer: WO 2009/098002

(56) Entgegenhaltungen:
- WO-A1-2005/113112
- WO-A1-2006/050934
- WO-A1-2006/136409
- DE-A1- 10 151 270

## Beschreibung

Die Erfindung betrifft eine Filtereinrichtung mit einem Filterelement zum Filtern von fluiden wie beispielsweise hydraulischen Flüssigkeiten oder Gasen.

Für die Filtration von flüssigen, gasförmigen oder pastösen Medien, beispielsweise hydraulischen Medien, Prozessflüssigkeiten oder auch Lebensmitteln wie Getränke, werden an den jeweiligen Anwendungsfall angepasste Filterelemente eingesetzt. Diese Filterelemente unterscheiden sich in zahlreichen Parametern wie beispielsweise dem verwendeten Werkstoff für das Filtermaterial, dessen Porengröße oder Druckstabilität. Visuell sind diese unterschiedlichen Merkmale in vielen Fällen nicht oder jedenfalls nicht ohne weiteres erkennbar.

Daher besteht grundsätzlich die Gefahr, dass in eine vorhandene Filtereinrichtung ein für den jeweiligen Anwendungsfall nicht optimal geeignetes oder ungeeignetes Filterelement eingebaut wird und dadurch ein Schaden an der Filtereinrichtung, dem zu filtrierenden Medium oder dem an die Filtereinrichtung anschließenden System entstehen kann. So kann beispielsweise bei nicht ausreichender Filtration ein Verschleiß oder ein Komponentenausfall an der Filtereinrichtung auftreten; entsprechendes gilt bei der Verwendung von Filterelementen mit gegenüber dem zu filtrierenden Medium nicht ausreichender chemischer und/oder mechanischer Beständigkeit. Weiterhin kann es zu einer Verunreinigung des Fluids durch Abgabe von Schadstoffen durch das ungeeignete Filterelement kommen. Außerdem ist nicht ausgeschlossen, dass bei einem Austausch eines verbrauchten Filterelements vergessen wird, ein neues Filterelement in das zugehörige Filtergehäuse einzusetzen, und versehentlich das leere Filtergehäuse an die Filtereinrichtung angeschlossen wird.

Ein weiteres Problem ergibt sich dadurch, dass bei einem in Gebrauch befindlichen Filterelement nicht ohne weiteres ermittelt werden kann, wie lange das Filterelement noch eine ausreichende Filtration bei den gegebenen Betriebsbedingungen gewährleistet. Dies gilt umso mehr bei bestimmten Filterelementtypen, die keine kontinuierliche Reduzierung der Filtereigenschaft aufweisen, sondern bei denen nach einer von der jeweiligen Betriebsart abhängigen Betriebsdauer die Filtereigenschaft abrupt abnimmt.

Aus der WO 2004/085027 A1 ist ein System mit einem Filter und einem zugehörigen Filterelement bekannt, das einen Datenspeicher aufweist, zum Speichern von Daten betreffend das Filterelement.

Aus der DE 10 2004 054 172 A1 sowie der WO 2006/050934 A1 ist ein Filterelement bekannt, das einen Datenspeicher aufweist und bei dem mittels eines außerhalb des Filterelements angeordneten Lese- und/oder Schreibgeräts in dem Datenspeicher gespeicherte Daten aus dem Datenspeicher elektronisch auslesbar sind. Die Datenübertragung erfolgt mittels einer an dem Datenspeicher angeordneten oder von diesem ausgebildeten Antenne, die auch die für den Betrieb des Datenspeichers erforderliche Energie zu dem Datenspeicher übertragen kann, so dass dieser keine eigene Energiequelle aufweisen muss. Der Abstand zwischen Datenspeicher und Antenne sollte dabei möglichst gering sein, um eine sichere Energie- und Datenübertragung zu gewährleisten.

Aus der DE 101 51 270 B4 ist ein System und ein Verfahren zur Überwachung der Integrität eines Filterelements bekannt, wobei in einer Filtrieranlage eine Leseeinrichtung vorgesehen ist, mit welcher Validierungs- und Prüfdaten aus einem in dem Filterelement integrierten Speicherelement auslesbar sind.

Aus der WO 2006/136409 A1 ist eine Filterpatrone bekannt, wie sie als Wasserfilterpatrone in Haushaltsgeräten mit Wassertank verwendet werden, beispielsweise in Espressomaschinen. Die in einem Wassertank einsetzbare Filterpatrone weist ein Kommunikationselement auf, mittels dem patronenspezifische Informationen für ein entsprechendes externes Kommunikationselement zugänglich sind.

Aus der WO 2005/113112 A1 ist eine Filtereinrichtung mit den Merkmalen des Oberbegriffs des Patentanspruchs 1 bekannt.

Der Erfindung liegt die Aufgabe zugrunde, eine Filtereinrichtung mit einem Filterelement bereitzustellen, welche die Betriebssicherheit noch weiter erhöht und dabei den Aufwand bei der Herstellung und Montage des Filterelements möglichst gering hält.

Diese Aufgabe ist durch die im Anspruch 1 bestimmte Filtereinrichtung gelöst. Besondere Ausführungsarten der Erfindung sind in den Unteransprüchen bestimmt.

Das Filterelement ist mindestens abschnittsweise im Wesentlichen zylindrisch und dementsprechend kann das Filtergehäuse topfförmig ausgebildet sein, wobei die Längsachse des Filterelements und die Längsachse des Filtergehäuses im montierten Zustand zusammenfallen. Für den Fall, dass der Datenspeicher exzentrisch in Bezug auf die Längsachse an dem Filterelement angeordnet ist, ist der Abstand zwischen dem Datenspeicher und dem Lese- und/oder Schreibgerät abhängig von der Winkelstellung des Filterelements, nämlich von der Winkelposition des Datenspeichers in Bezug auf die Längsachse des Filterelements. Wenn dieser Abstand relativ groß ist und darüber hinaus besondere Störeinflüsse vorliegen, beispielsweise lokal am Ort der Filtereinrichtung eine hohe elektromagnetische Strahlung vorhanden ist, wie dies in Produktionsanlagen der Fall sein kann, oder das zu filtrierende Fluid selbst Störfelder verursacht, etwa weil es Ionen oder metallische Partikel aufweist, kann die Signalübertragung zwischen Datenspeicher und Lese- und/oder Schreibgerät beeinträchtigt sein.

Dieses Problem kann grundsätzlich durch eine höhere Sendeleistung des Lese- und/oder Schreibgerätes kompensiert werden, allerdings ist damit auch ein höherer Energieverbrauch verbunden, der nicht nur höhere Betriebskosten sondern auch einen erhöhten Installations- und Montageaufwand erfordert.

Dieses Problem könnte auch dadurch gelöst werden, dass das Filterelement und das Filtergehäuse miteinander korrespondierende Anlage- oder Rastmittel aufweisen, welche das Einsetzen des Filterelements in das Filtergehäuse nur in einer bestimmten Winkelstellung ermöglichen. In der Praxis ist allerdings unter den gegebenen, teilweise rauen Betriebsbedingungen, wie beispielsweise bei mobilen Filtereinrichtungen in hydraulischen Anlage auf Baustellen und dergleichen, nicht immer zu gewährleisten, dass die Filterelemente in der richtigen Winkelstellung in das Filtergehäuse eingesetzt werden, oder dies bedeutet jedenfalls einen erhöhten Montageaufwand.

Erfindungsgemäß wird dieses Problem dadurch gelöst, dass die Antenne für die Signalkopplung zwischen dem Datenspeicher und dem Lese- und/oder Schreibgerät sich mindestens abschnittsweise um die Längsachse des Filterelements herum erstreckt. Dadurch ist in jeder beliebigen Winkelstellung des Filterelements in Bezug auf das Filtergehäuse eine sichere Datenübertragung gewährleistet.

In einer Ausführungsart erstreckt sich die Antenne über einen Winkelbereich von mindestens 90°, vorzugsweise mindestens 180° und insbesondere mindesten 270° um die Längsachse herum. Selbst bei einer Erstreckung von nur etwa 90° kann der maximal auftretende Abstand zwischen der Antenne und dem Datenspeicher auf ein Maß reduziert werden, das eine sichere Signalübertragung gewährleistet. In einer Ausführungsart erstreckt sich die Antenne im Wesentlichen über 360° und damit ringförmig um die Längsachse herum.

In einer Ausführungsart ist die Antenne an oder nahe einem axialen Ende des Filterelements angeordnet. Auch der Datenspeicher kann an oder nahe einem axialen Ende des Filterelements angeordnet sein, vorzugsweise mittels einer das Filtermaterial fixierenden Vergussmasse unlösbar mit dem Filterelement verbunden sein. Der Datenspeicher kann dabei integral in das Filterelement eingebaut sein, beispielsweise in ein Stützrohr, eine Endkappe oder einen Außenmantel des Filterelements eingegossen oder eingespritzt sein, oder an dem Filterelement von außen vorzugsweise unlösbar festgelegt sein, beispielsweise durch Verkleben, Verschweißen oder dergleichen. In einer Ausführungsart ist der Datenspeicher von außen nicht erkennbar. Für einige Anwendungsfälle kann es allerdings vorteilhaft sein, wenn die Position des Datenspeichers an dem Filterelement von außen erkennbar ist, beispielsweise indem der Datenspeicher selbst erkennbar ist oder indem eine Markierung an der entsprechenden Stelle angebracht ist. Vorzugsweise steht der Datenspeicher nicht über die Kontur des Filterelements hinaus. Dadurch können erfindungsgemäße Filterelemente auch in bereits montierte Filtergehäuse bestehender Filtereinrichtungen eingesetzt werden.

Die Antenne ist an oder in einem Auflageelement angeordnet, an welches das Filterelement in Anlage bringbar ist. Die innerhalb des Filtergehäuses angeordnete Antenne oder ein Lese- und/oder Schreibkopf des Lese- und/oder Schreibgeräts kann über eine fluiddichte Verbindung mit dem außerhalb des Filtergehäuses angeordneten Teil des Lese- und/oder Schreibgeräts elektrisch verbunden sein. Das Auflageelement kann insbesondere eine ringförmige Anlagefläche für die Endkappe des Filterelements aufweisen, und die Antenne kann auf der dem Filterelement zugewandten oder abgewandten Seite des Auflageelements angeordnet sein.

In dem Datenspeicher können insbesondere die das Filterelement spezifizierenden Daten gespeichert sein. Dabei kann es sich beispielsweise um Daten handeln, die eine Identifikation des Typs des Filterelements ermöglichen, beispielsweise hinsichtlich dessen Filtermaterials, der zu filtrierenden Medien, der Abmessungen, des Herstelldatums und dergleichen. Außerdem können Daten gespeichert werden, die eine Identifizierung des individuellen Filterelements ermöglichen, beispielsweise eine nur einmal vergebene und vorzugsweise fortlaufende Fabrikationsnummer. Soweit es sich dabei um Daten handelt, die bereits bei der Herstellung des Filterelements bestimmt sind, können diese Daten in einem nicht-überschreibbaren und nur-lesbaren Speicherbereich des Datenspeichers gespeichert sein, sodass sie unveränderlich und insbesondere nicht manipulierbar sind.

Alternativ oder ergänzend können auch Daten speicherbar sein, die erst nach der Herstellung des Filterelements auftreten, insbesondere Betriebsdaten des Filterelements wie das Datum der Inbetriebnahme, die Art und Dauer des Einsatzes, das filtrierte Medium und dergleichen. Diese Daten sind in einem mindestens einmal-beschreibbaren Speicherbereich des Datenspeichers speicherbar, vorzugsweise in einem nur einmal-beschreibbaren Speicherbereich, in dem eine fortlaufende Protokollierung des Filterelements abgelegt werden kann. Die einzuschreibenden Daten können mit einem unveränderlichen Datumsstempel versehen sein. Das Einschreiben dieser Daten erfolgt vorzugsweise über das Lese- und/oder Schreibgerät. Wenn dieser Speicherbereich nur einmalbeschreibbar ist, ist gewährleistet, dass die Betriebsdaten im Nachhinein nicht manipulierbar sind. Dies ist vorteilhaft im Hinblick auf Gewährleistungsansprüche, die bei einem Ausfall des Filterelements erhoben werden könnten. Das Merkmal, dass die Daten nur einmal in den Datenspeicher einschreibbar sind, kann durch softwaretechnische Maßnahmen realisiert werden, beispielsweise indem jede Speicheradresse nur einmal zum Einschreiben verwendbar ist und anschließend nicht mehr zur Verfügung steht, oder durch hardwaretechnische Maßnahmen, beispielsweise indem beim Einschreiben irreversible Speichervorgänge erfolgen, etwa durch Aufschmelzen von Verbindungsleitungen.

Vorzugsweise arbeitet der Datenspeicher nach dem Transponderprinzip und ist erst nach einer entsprechenden und gegebenenfalls durch Codewörter gesicherten Stimulation durch das Lese- und/oder Schreibgerät zur Datenübertragung bereit. Es ist beispielsweise möglich, dass die Daten aus dem Datenspeicher dadurch auslesbar sind, dass der Datenspeicher oder eine zugeordnete Empfangseinheit ein von dem Lese- und/oder Schreibgerät ausgesandtes Signal entsprechend den gespeicherten Daten modifiziert, beispielsweise abschwächt, oder in vorbestimmbarer Weise moduliert, beispielsweise durch Veränderung der Amplitude, Phase oder Frequenz des elektromagnetischen Feldes. Das Lese- und/oder Schreibgerät weist eine Empfangseinheit auf, welche das modifizierte Signal empfängt und gegebenenfalls demoduliert, und dadurch die Daten des Datenspeichers extrahiert.

In einer besonderen Ausführungsart der Erfindung ist die für den Betrieb des Datenspeichers erforderliche Energie von dem Lese- und/oder Schreibgerät auf den Datenspeicher oder auf eine dem Datenspeicher zugeordnete mit dem Datenspeicher verbundene Empfangseinheit übertragbar. Vorzugsweise erfolgt die Energieübertragung kontaktlos, beispielsweise durch Bereitstellung eines ausreichend starken elektromagnetischen Feldes oder dergleichen.

In einer besonderen Ausführungsart sind von einer Steuereinrichtung, in die mindestens ein Teil des Lese- und/oder Schreibgeräts integriert sein kann, laufend, in vorgebbaren Zeitabständen und/oder ereignisbedingt Parameter betreffend den Betrieb des Filterelements in der Filtereinrichtung in den Datenspeicher einschreibbar. Dabei kann es sich um Daten handeln, die lokal am Ort des Filterelements ermittelt werden, beispielsweise den über das Filterelement auftretenden Differenzdruck, oder um Daten, die von einer übergeordneten und mehrere Lese- und/oder Schreibgerät steuernden Steuereinrichtung vorgegeben werden, beispielsweise Daten zur Charakterisierung des zu filternden Mediums.

Unter Verwendung von aus dem Datenspeicher ausgelesenen Daten wie beispielsweise Betriebsdauer, gefiltertes Medium, Betriebsdruck, Betriebstemperatur und dergleichen kann eine Steuereinrichtung die verbleibende Betriebsdauer oder Standzeit des Filterelements berechnen. Diese Berechnung kann in dem Lese- und/oder Schreibgerät selbst erfolgen kann, oder das Lese- und/oder Schreibgerät übermittelt diese Daten an eine übergeordnete Steuereinrichtung. Diese übergeordnete Steuereinrichtung kann insbesondere in entsprechender Weise mehrere erfindungsgemäß ausgerüstete Filterelemente überwachen und steuern, und beispielsweise bei Erreichen eines kritischen Betriebszustandes die Filtereinrichtung derart steuern, dass andere Filterelemente zugeschaltet werden.

Die aus dem Datenspeicher ausgelesenen Daten und/oder daraus berechnete oder abgeleitete Daten können durch eine Anzeigeeinrichtung am Ort des Filtergehäuses signalisierbar sein, beispielsweise durch ein Leuchtmittel zum Signalisieren eines anstehenden Wechsels des Filterelements, durch akustische Signalgeber oder dergleichen.

Die Antenne kann an dem Filtergehäuse angeordnet sein und über eine Anschlussleitung galvanisch mit dem Lese- und/oder Schreibgerät verbunden sein. In diesem Fall erfolgt die kontaktlose Signalübertragung von der Antenne, die einen Lese- und/oder Schreibkopf bildet, zu dem Datenspeicher.

Alternativ hierzu kann die Antenne auch über eine elektrische Verbindungsleitung mit dem Datenspeicher galvanisch verbunden sein, wobei dann vorzugsweise die Antenne an oder in einer Endkappe des Filterelements angeordnet ist, insbesondere mittels einer das Filtermaterial fixierenden Vergussmasse unlösbar mit dem Filterelement verbunden. In diesem Fall erfolgt die kontaktlose Signalübertragung von einem vorzugsweise innerhalb des Filtergehäuses angeordneten Lese- und/oder Schreibkopf des Lese- und/oder Schreibgeräts zu der mit dem Datenspeicher galvanisch verbundenen Antenne.

In einem weiteren Ausführungsbeispiel ist die Antenne galvanisch sowohl von dem Lese- und/oder Schreibgerät als auch von dem Datenspeicher getrennt und fungiert lediglich als Koppelspule zwischen einer Sende-/Empfangsspule des Lese- und/oder Schreibgerätes und einer Antenne des Datenspeichers. Durch eine geeignete Anordnung der Antenne, insbesondere im Bereich zwischen dem Datenspeicher des Filterelements und einem Lese- und/oder Schreibkopf des Lese- und/oder Schreibgerätes des Filtergehäuses, vorzugsweise an oder nahe einem axialen Ende des Filterelements, kann auf diese Weise die kontaktlose Datenübertragung verbessert werden.

Die Erfindung betrifft eine Filtereinrichtung mit einem vorstehend beschriebenen Filterelement.

In einer Ausführungsart ist an der Einlassstelle für das zu filternde Fluid und/oder an der Auslassstelle für das filtrierte Fluid ein Absperrventil angeschlossen. Eine mit dem Lese- und/oder Schreibgerät verbundene und das Absperrventil steuernde Steuereinrichtung liest vor jedem Öffnen des Absperrventils mittels des Lese- und/oder Schreibgerätes Daten aus dem Datenspeicher des Filterelements aus. Die Steuereinrichtung öffnet das Absperrventil nur dann, wenn zuvor von dem Lese- und/oder Schreibgerät aus dem Datenspeicher des Filterelements vorgebbare Daten ausgelesen wurden. So kann beispielsweise nach einem Tausch des Filterelements von der Steuereinrichtung zunächst geprüft werden, ob ein für den vorliegenden Anwendungsfall spezifiziertes Filterelement eingesetzt wurde, bevor die Absperrventile geöffnet werden und dadurch das Filterelement in dem Fluidstrom zugeschaltet wird. Dadurch können Schäden sowohl an dem Filterelement oder der Filtereinrichtung, als auch vor allem an den angeschlossenen Systemkomponenten verhindert werden.

In einer Ausführungsart können die Daten aus dem Datenspeicher regelmäßig, beispielsweise in vorgebbaren Zeitabständen, oder unregelmäßig, beispielsweise ereignisgesteuert, etwa wenn eine besondere Systemleistung gefordert wird, abgefragt werden. Die Steuereinrichtung kann daraufhin die Ventile schließen, wenn nicht die vorgebbaren Daten ausgelesen wurden, beispielsweise eine erforderliche Filterleistung oder eine erforderliche verbleibende Betriebsdauer, oder die Pumpenleistung des Systems reduzieren.

In einer Ausführungsart ist das Filtergehäuse mit einem Deckel verschließbar und die Steuereinrichtung prüft vor jedem Öffnen des Absperrventils mittels eines Sensors, beispielsweise eines induktiven Näherungsschalters, ob der Deckel tatsächlich geschlossen ist. Das Absperrventil wird nur geöffnet, wenn der Sensor signalisiert, dass der Deckel geschlossen ist. Auch dieser Sensor kann regelmäßig abgefragt werden, und die Ventile können geschlossen werden, wenn der Deckel nicht verschlossen ist.

In einer Ausführungsart ist mindestens ein Lese- und/oder Schreibkopf des Lese- und/oder Schreibgerätes innerhalb des Filtergehäuses angeordnet. Die elektrischen Anschlüsse des Lese- und/oder Schreibkopfes sind durch eine fluiddichte Durchführung aus dem Inneren des Filtergehäuses nach außen geführt. Die Durchführung ist an oder nahe einem axialen Ende des Filtergehäuses angeordnet. Die Durchführung kann radial nach außen geführt sein, insbesondere in einem Bereich, in dem eine weiterführende Leitung oder das Lese- und/oder Schreibgerät an der Mantelfläche des Filtergehäuses angeordnet ist.

Weitere Vorteile, Merkmale und Einzelheiten der Erfindung ergeben sich aus den Unteransprüchen und der nachfolgenden Beschreibung, in der unter Bezugnahme auf die Zeichnungen ein Ausführungsbeispiel im Einzelnen beschrieben ist. Dabei können die in den Ansprüchen und in der Beschreibung erwähnten Merkmale jeweils einzeln für sich oder in beliebiger Kombination erfindungswesentlich sein.
- Fig. 1: zeigt eine perspektivische Ansicht einer erfindungsgemäßen Filtereinrichtung,
- Fig. 2: zeigt in vergrößerter Darstellung eine perspektivische Ansicht eines Ausschnitts der Filtereinrichtung der Fig. 1, und
- Fig. 3: zeigt einen weiter vergrößerten Ausschnitt der Filtereinrichtung der Fig. 1 im Querschnitt.

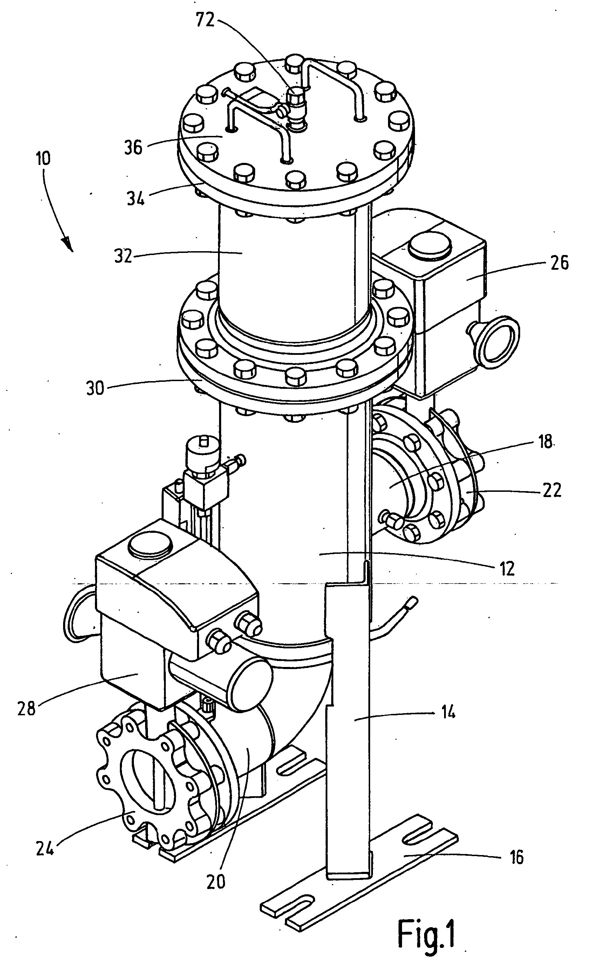

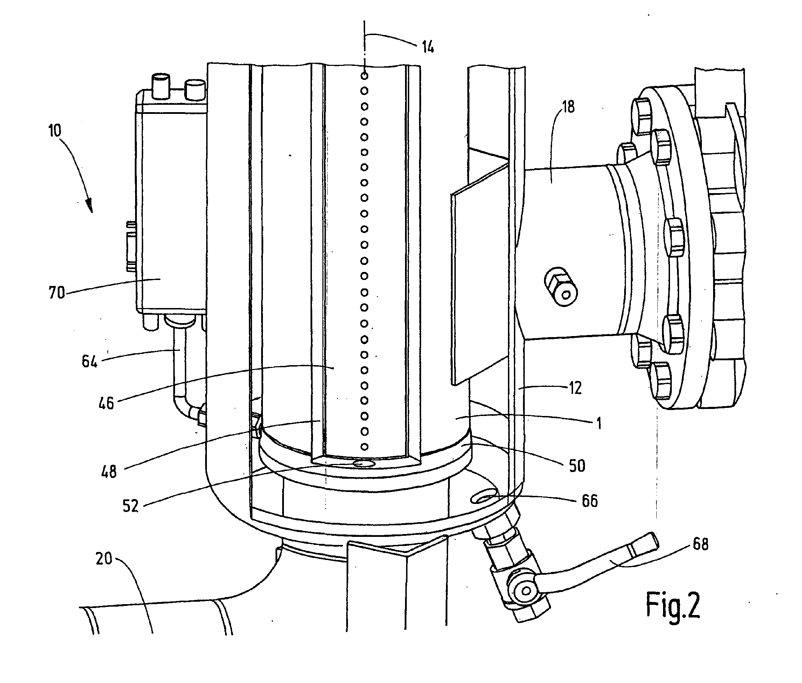

Die Fig. 1 zeigt eine perspektivische Ansicht einer erfindungsgemäßen Filtereinrichtung 10 mit einem Filtergehäuse 12, das mindestens abschnittsweise hohlzylindrisch ist und in dem von ihm umschlossenen Hohlraum ein Filterelement 1 (Fig. 2) aufnimmt. An dem Filtergehäuse 12 sind Schienen 14, insbesondere im Querschnitt L-förmige Schienen 14, angebracht, die an einem von dem Filtergehäuse 12 beabstandeten Ende fest mit quer verlaufenden Befestigungslaschen 16 verbunden sind, mittels denen die Filtereinrichtung 10 aufstellbar und/oder an einer Trageinrichtung festlegbar ist.

Das Filtergehäuse 12 weist eine Einlassstelle 18 für das zu filternde Fluid und eine Auslassstelle 20 für das filtrierte Fluid auf. An ihrem von dem Filtergehäuse 12 entfernten Ende sind die Einlassstelle 18 und die Auslassstelle 20 flanschartig verbreitert. An dem Flansch der Einlassstelle 18 ist ein erstes Absperrventil 22 angeordnet und an der Auslassstelle 20 ist ein zweites Absperrventil 24 angeordnet. Das erste und zweite Absperrventil 22, 24 ist von einer Steuereinrichtung steuerbar motorisch antreibbar. Hierzu weist das erste Absperrventil 22 eine erste Antriebseinrichtung 26 auf, und das zweite Absperrventil 24 eine zweite Antriebseinrichtung 28.

Das Filtergehäuse 12 ist nach einer Seite hin offen zum Einsetzen des Filterelements 1. Die offene Seite weist einen Verschlussflansch 30 auf, an dem ein Verschlusselement 32 angeordnet werden kann, das im wesentlichen rohrförmig und kreiszylindrisch ausgebildet ist und einen Hohlraum begrenzt, in den beispielsweise eine Verschmutzungseinrichtung eingesetzt werden kann. An ihrem von dem Filtergehäuse 12 entfernten Ende weist das Verschlusselement 32 einen Flansch 34 auf, an dem eine Verschlussplatte 36 festgelegt werden kann. Die Filtereinrichtung 10 weist vorzugsweise zentrisch auf der Verschlussplatte 36 ein Entlüftungsmittel 72 auf, vorzugsweise einen Kugelhahn. Die Filtereinrichtung 10 weist außerdem einen Sensor oder Schalter auf, der mit der Steuereinrichtung verbunden ist, und mit dem detektierbar ist, ob das Filtergehäuse 12 durch das Verschlusselement 32 und/oder die Verschlussplatte 36 verschlossen ist.

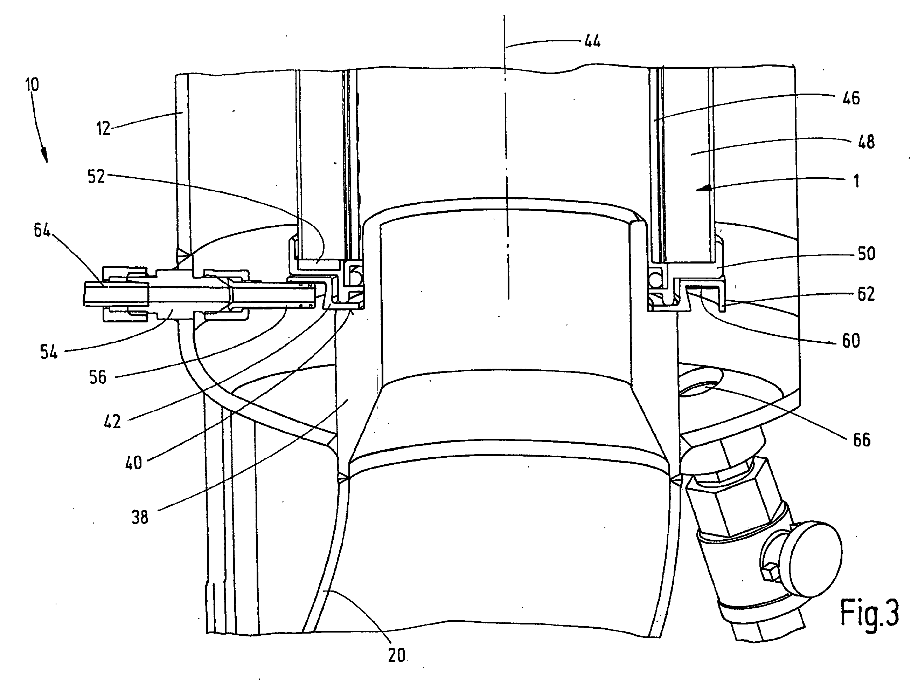

Die Fig. 2 zeigt in vergrößerter Darstellung eine perspektivische Ansicht eines Ausschnitts der Filtereinrichtung 10 der Fig. 1 im Bereich der Auslassstelle 20, wobei das Filtergehäuse 12 teilweise aufgeschnitten dargestellt ist. Die Fig. 3 zeigt einen weiter vergrößerten Ausschnitt der Filtereinrichtung 10 im Querschnitt im Bereich der Auslassstelle 20. Die die Auslassstelle 20 bildende Rohrleitung ragt stutzenförmig in die Bodenfläche des Filtergehäuses 12 hinein und bildet im Bereich eines Aufsetzstutzens 38 einen ringförmigen Absatz 40, auf den ein ringförmiges Auflageelement 42 aufgesetzt ist. Das Auflageelement 42 weist eine Kröpfung auf, wobei die beiden parallel zueinander verlaufenden Abschnitte axial in Richtung der Längsachse 44 versetzt sind und rechtwinklig zur Längsachse 44 verlaufen. Das Auflageelement 42 ist mit einem dieser Abschnitte in Anlage an dem Absatz 40 ist und bildet mit dem anderen dieser Abschnitte eine Aufsetzfläche für das Filterelement 1.

Das Filterelement 1 ist im wesentlichen zylindrisch und insbesondere kreiszylindrisch mit der Längsachse 44 ausgebildet und umfaßt radial innenliegend ein Stützrohr 46, auf welches das Filtermaterial 48 aufgebracht ist. Axial endseitig ist auf das Filterelement 1 eine Endkappe 50 aufgebracht, die das Filterelement 1 axial abschließt und die mit einer Endseite auf das Auflageelement 42 aufgelegt ist. An mindestens einer Stelle in Umfangsrichtung um die Längsachse 44 weist das Filterelement 1 einen Datenspeicher 52 auf, der vorzugsweise an der dem Filtermaterial 48 zugewandten Fläche der Endkappe 50 angeordnet ist, insbesondere in die Endkappe 50 unlösbar von dem Filterelement 1 eingebracht ist. Vorzugsweise ist der Datenspeicher 52 in eine das Filtermaterial 48 mit der Endkappe 50 fest und unlösbar verbindende Vergussmasse eingebettet.

An oder nahe dem der Auslassstelle 20 benachbarten Ende des Filtergehäuses 12 ist in dessen Wandung eine Durchführung 54 eingebracht, mittels welcher eine elektrische Verbindung entweder zu einer Antenne 60 oder zu einem radial in Bezug auf die Längsachse 44 in den von dem Filtergehäuse 12 umschlossenen und das Filterelement 1 aufnehmenden Hohlraum hinein ragenden Lese- und/oder Schreibkopf 56 mediendicht durch die Wandung des Filtergehäuses 12 durchführbar ist. Die Durchführung 54 verläuft rechtwinklig zur Längsachse 44 bis nahe an den Aufsetzstutzen 48 heran und ist axial im Bereich des Auflageelements 42 angeordnet. Hierzu weist das Auflageelement 42, das ansonsten auf seinem radial äußeren umlaufenden Rand einen parallel zur Längsachse 44 sich erstreckenden zylindrischen Abschnitt 62 aufweist, eine Öffnung für den Durchtritt der Durchführung 54 oder des Lese und/oder Schreibkopfs auf.

Auf der dem Filterelement 1, insbesondere der Endkappe 50, gegenüberliegenden Seite ist in dem rechtwinklig zur Längsachse 44 verlaufenden, die Auflagefläche für die Endkappe 50 bildenden Abschnitt des Auflageelements 42 eine kreisringförmig um die Längsachse 44 herum verlaufende Antenne 60 angeordnet, die im einfachsten Fall durch eine Leiterschleife gebildet sein kann. Durch die ringförmige Anordnung der Antenne 60 ist unabhängig von der Winkelposition des Filterelements 1, insbesondere unabhängig von der Position des Datenspeichers 52, eine sichere Signalkopplung zwischen dem Datenspeicher 52 und dem Lese- und/oder Schreibkopf 56 gewährleistet. Die elektrische Verbindung zu der Antenne 60 oder zu einem Lese- und/oder Schreibkopf 56 wird über ein außerhalb des Filtergehäuses 12 an die Durchführung 54 anschließendes Verbindungsrohr 64 zu der Steuereinrichtung geführt, in der auch ein Teil des Lese- und/oder Schreibgerätes 70 integriert sein kann oder die ihrerseits mindestens teilweise in Baueinheit mit dem Lese- und/oder Schreibgerät 70 ausgebildet sein kann.

In der sich ringförmig um den Aufsetzstutzen 38 erstreckenden Bodenfläche des Filtergehäuses 12 ist ein Ablauf 66 angeordnet, an den fluiddicht ein Absperrhahn 68 angeschlossen ist, der manuell betätigbar ist und mittels dem auch bei geschlossenem zweiten Absperrventil 24 das Filtergehäuse 12 entleert werden kann.

Im Falle eines Filterwechsels werden von der Steuereinrichtung das erste und zweite Absperrventil 22, 24 geschlossen und damit die Filtereinrichtung 10 aus dem Fluidkreislauf genommen. Nach einem gegebenenfalls erforderlichen Entleeren des Filtergehäuses 12 über den Ablauf 66 kann das verbrauchte Filterelement 1 entnommen werden. Nach dem Einsetzen eines neuen Filterelements 1 fragt die Steuereinrichtung über das Lese- und/oder Schreibgerät den Datenspeicher 52 ab. Die dabei ausgelesenen Daten werden auf vorgebbare Kriterien geprüft, beispielsweise ob es sich dabei um ein für die Filtereinrichtung 10 zugelassenes Filterelement 1 handelt, oder dergleichen. Alternativ oder ergänzend kann die Steuereinrichtung auch noch abfragen, ob der Sensor oder Schalter einen ordnungsgemäßen Verschluss des Filtergehäuses 12 durch das Verschlusselement 32 und/oder die Verschlussplatte 36 signalisieren. Sollte eines der vorgegebenen Kriterien nicht oder nicht vollständig erfüllt sein, verriegelt die Steuereinrichtung das erste und zweite Absperrventil 22, 24 im geschlossenen Zustand, gegebenenfalls auch gegen eine manuelle Betätigung, und verhindert dadurch, dass die Filtereinrichtung 10 wieder in den Fluidkreislauf geschaltet werden kann.

## Patentansprüche

1. Filtereinrichtung (10) mit einem Filterelement (1) zum Filtern von Fluiden wie beispielsweise hydraulischen Flüssigkeiten oder Gasen und mit einem das Filterelement (1) aufnehmenden Filtergehäuse (12) mit einer Einlassstelle (18) für das zu filternde Fluid und einer Auslassstelle (20) für das filtrierte Fluid, wobei das Filterelement (1) einen Datenspeicher (52) aufweist und mittels eines Lese- und/oder Schreibgeräts (70) in dem Datenspeicher (52) gespeicherte Daten aus dem Datenspeicher (52) elektronisch auslesbar sind, wobei eine sich außerhalb des Datenspeichers (52) erstreckende Antenne (60) für die Signalkopplung zwischen dem Datenspeicher (52) und dem Lese- und/oder Schreibgeräts (70) vorgesehen ist, und die Antenne (60) sich mindestens abschnittsweise um eine Längsachse (44) des Filterelements (1) herum erstreckt und dadurch unabhängig von der Winkelstellung des Filterelements (1) und des daran angebrachten Datenspeichers (52) eine Signalkopplung zwischen dem Datenspeicher (52) und dem Lese- und/oder Schreibgerät (70) gewährleistet ist, und wobei die Antenne (60) an oder in einem Auflageelement (42) angeordnet ist, an welches das Filterelement (1) in Anlage bringbar ist, **dadurch gekennzeichnet, dass** an oder nahe dem der Auslassstelle (20) benachbarten Ende des Filtergehäuses (12) in dessen Wandung eine rechtwinklig zur Längsachse (44) der Filtereinrichtung (1) verlaufende Durchführung (54) eingebracht ist, mittels welcher eine elektrische Verbindung entweder zu der Antenne (60) oder zu einem radial in Bezug auf die Längsachse (44) in den von dem Filtergehäuse (12) umschlossenen und das Filterelement (1) aufnehmenden Hohlraum hinein ragenden Lese- und/oder Schreibkopf (56) mediendicht durch die Wandung des Filtergehäuses (12) durchführbar ist, und dass die Durchführung axial im Bereich des Auflageelements (42) angeordnet ist, an oder in dem die Antenne (60) angeordnet ist.

2. Filtereinrichtung (10) nach Anspruch 1, **dadurch gekennzeichnet, dass** die Antenne (60) sich über einen Winkelbereich von mindestens 90°, vorzugsweise mindestens 180° und insbesondere mindestens 270° um die Längsachse (44) herum erstreckt.

3. Filtereinrichtung (10) nach Anspruch 1 oder einem der vorgenannten Ansprüche, **dadurch gekennzeichnet, dass** die Antenne (60) an oder nahe einem axialen Ende des Filterelements (1) angeordnet ist.

4. Filtereinrichtung (10) nach Anspruch 1 oder einem der vorgenannten Ansprüche, **dadurch gekennzeichnet, dass** die Antenne (60) an oder in dem Auflageelement (42) des Filtergehäuses (12) angeordnet ist, an das eine Endkappe (50) des Filterelements (1) in Anlage bringbar ist.

5. Filtereinrichtung (10) nach Anspruch 1 oder einem der vorgenannten Ansprüche, **dadurch gekennzeichnet, dass** an der Einlassstelle (18) für das zu filternde Fluid und/oder an der Auslassstelle (20) für das filtrierte Fluid ein Absperrventil (22, 24) angeschlossen ist, und dass eine mit dem Lese- und/oder Schreibgerät (70) verbundene und das Absperrventil (22, 24) steuernde Steuereinrichtung vor jedem Öffnen des Absperrventils (22, 24) mittels des Lese- und/oder Schreibgeräts (70) Daten aus dem Datenspeicher (52) des Filterelements (1) ausliest und das Absperrventil (22, 24) nur öffnet und damit das Filterelement (1) in den Fluidstrom zuschaltet, wenn zuvor von dem Lese- und/oder Schreibgerät (70) aus dem Datenspeicher (52) des Filterelements (1) vorgebbare Daten auslesbar sind.

6. Filtereinrichtung (10) nach Anspruch 1 oder einem der vorgenannten Ansprüche, **dadurch gekennzeichnet, dass** das Filtergehäuse (12) mit einem Verschlusselement (32) verschließbar ist, und dass an der Einlassstelle (18) für das zu filternde Fluid und/oder an der Auslassstelle (20) für das filtrierte Fluid ein Absperrventil (22, 24) angeschlossen ist, und dass eine das Absperrventil (22, 24) steuernde Steuereinrichtung vor jedem Öffnen des Absperrventils (22, 24) mittels eines Sensors die verschließende Position des Verschlusselements (32) prüft und das Absperrventil (22, 24) nur öffnet und damit das Filterelement (1) in den Fluidstrom zuschaltet, wenn zuvor von dem Sensor signalisierbar ist, dass das Filtergehäuse (12) geschlossen ist.

7. Filtereinrichtung (10) nach Anspruch 1 oder einem der vorgenannten Ansprüche, **dadurch gekennzeichnet, dass** das Lese- und/oder Schreibgerät (70) einen Lese- und/oder Schreibkopf (56) aufweist, der innerhalb des Filtergehäuses (12) angeordnet ist, und dass elektrische Anschlüsse des Lese- und/oder Schreibkopfs (56) mittels einer fluiddichten und druckdichten Durchführung (54) aus dem Inneren des Filtergehäuses (12) nach außerhalb des Filtergehäuses (12) geführt sind.

8. Filtereinrichtung (10) nach Anspruch 1 oder einem der vorgenannten Ansprüche, **dadurch gekennzeichnet, dass** das Lese- und/oder Schreibgerät (70) an der Filtereinrichtung (10), insbesondere an dem Filtergehäuse (12), angeordnet ist.

## Claims

1. A filter device (10) comprising a filter element (1) for filtering fluids such as for example hydraulic liquids or gases and comprising a filter housing (12) accommodating the filter element (1) and with an inlet point (18) for the fluid to be filtered and an outlet point (20) for the filtered fluid, the filter element (1) having a data memory (52) and data stored in the data memory (52) being able to be read out electronically from the data memory (52) by means of a reading and/or writing device (70), an antenna (60) extending outside of the data memory (52) being provided for the signal coupling between the data memory (52) and the reading and/or writing device (70), and the antenna (60) extending at least partially about a longitudinal axis (44) of the filter element (1) and in this way signal coupling between the data memory (52) and the reading and/or writing device (70) being guaranteed independently of the angular position of the filter element (1) and the data memory (52) that is connected to said filter element, and the antenna (60) being disposed on or in a bearing element (42) to which the filter element (1) can be attached, **characterised in that** there is placed on or near to the end of the filter housing (12) adjacent to the outlet point (20) and in the wall of which a passage (54) is inserted running at right angles to the longitudinal axis (44) of the filter device (1), by means of which an electrical connection, either to the antenna (60) or to a reading and/or writing head (56) projecting radially, in relation to the longitudinal axis (44), into the cavity enclosed by the filter housing (12) and accommodating the filter element (1), can be passed, medium-tight, through the wall of the filter housing, and that the passage is arranged axially in the region of the bearing element (42), on or in which the antenna (60) is disposed.

2. The filter device (10) according to Claim 1, **characterised in that** the antenna (60) extends over an angular range of at least 90°, preferably at least 180°, and in particular at least 270° about the longitudinal axis (44).

3. The filter device (10) according to Claim 1 or any of the claims specified above, **characterised in that** the antenna (60) is disposed on or close to an axial end of the filter element (1).

4. The filter device (10) according to Claim 1 or any of the claims specified above, **characterised in that** the antenna (60) is disposed on or in the bearing element (42) of the filter housing (12) to which an end cap (50) of the filter element (1) can be attached.

5. The filter device (10) according to Claim 1 or any of the claims specified above, **characterised in that** a shut-off valve (22, 24) is attached to the inlet point (18) for the fluid to be filtered and/or to the outlet point (20) for the filtered fluid, and that prior to each opening of the shut-off valve (22, 24) a control device, which is connected to the reading and/or writing device (70) and controls the shut-off valve (22, 24) reads out data from the data memory (52) of the filter element (1) by means of the reading and/or writing device (70) and only opens the shut-off valve (22, 24), and so connects the filter element (1) into the fluid flow, if specifiable data were previously able to be read out from the data memory (52) of the filter element (1) by the reading and/or writing device (70).

6. The filter device (10) according to Claim 1 or any of the claims specified above, **characterised in that** the filter housing (12) can be closed with a closure element (32), and that a shut-off valve (22, 24) is attached to the inlet point (18) for the fluid to be filtered and/or to the outlet point (20) for the filtered fluid, and that prior to each opening of the shut-off valve (22, 24) a control device controlling the shut-off valve (22, 24) checks by means of a sensor the closing position of the closure element (32) and only opens the shut-off valve (22, 24), and so the filter element (1), into the fluid flow if previously the sensor was able to signal that the filter housing (12) is closed.

7. The filter device (10) according to Claim 1 or any of the claims specified above, **characterised in that** the reading and/or writing device (70) has a reading and/or writing head (56) which is disposed inside the filter housing (12), and that electrical connections of the reading and/or writing head (56) are guided from the inside of the filter housing (12) to outside of the filter housing (12) by means of a fluid-tight and pressure-tight passage (54).

8. The filter device (10) according to Claim 1 or any of the claims specified above, **characterised in that** the reading and/or writing device (70) is disposed on the filter device (10), in particular on the filter housing (12).

## Revendications

1. Dispositif (10) de filtration ayant un élément (1) filtrant pour filtrer des fluides, comme par exemple des liquides hydrauliques ou des gaz, et un corps (12) de filtre recevant l'élément (1) filtrant et ayant un point (18) d'entrée du fluide à filtrer et un point (20) de sortie du fluide filtré, l'élément (1) filtrant ayant une mémoire (52) de données et des données mémorisées dans la mémoire (52) de données pouvant, au moyen d'un appareil (70) de lecture et/ou d'écriture, être lues électroniquement dans la mémoire (52) de données, une antenne (60), s'étendant à l'extérieur de la mémoire (52) de données, étant prévue pour le couplage de signal entre la mémoire (52) de données et l'appareil (70) de lecture et/ou d'écriture et l'antenne (60) s'étendant au moins par tronçon autour d'un axe (44) longitudinal de l'élément (1) filtrant et ainsi un couplage de signal entre la mémoire (52) de données et l'appareil (70) de lecture et/ou d'écriture est assuré indépendamment de la position angulaire de l'élément (1) filtrant et de la mémoire (52) de données qui y est mise, et dans lequel l'antenne (60) est montée sur ou dans un élément (42) de support, sur lequel l'élément (1) filtrant peut être mis en appui, **caractérisé en ce que**, sur ou à proximité de l'extrémité, voisine du point (20) de sortie, du corps (12) de filtre, est ménagée dans sa paroi une traversée (54), qui s'étend à angle droit par rapport à l'axe (44) longitudinal du dispositif (1) de filtration et au moyen de laquelle une liaison électrique, soit avec l'antenne (60) soit avec une tête (56) de lecture et/ou d'écriture pénétrant radialement par rapport à l'axe (44) longitudinal dans la cavité entourée du corps (12) de filtre et recevant l'élément (1) filtrant, peut passer d'une manière étanche aux milieux à travers la paroi du corps (12) du filtre, et **en ce que** la traversée est disposée axialement dans la zone de l'élément (42) d'appui où ou sur lequel l'antenne (60) est montée.

2. Dispositif (10) de filtration suivant la revendication 1, **caractérisé en ce que** l'antenne (60) s'étend sur une plage angulaire d'au moins 90°, de préférence d'au moins 180° et notamment d'au moins 270° autour de l'axe (44) longitudinal.

3. Dispositif (10) de filtration suivant la revendication 1 ou l'une des revendications précédentes, **caractérisé en ce que** l'antenne (60) est montée sur ou à proximité d'une extrémité axiale de l'élément (1) filtrant.

4. Dispositif (10) de filtration suivant la revendication 1 ou l'un.e des revendications précédentes, **caractérisé en ce que** l'antenne (60) est montée sur ou dans l'élément (42) d'appui du corps (12) du filtre, sur lequel une coiffe (50) d'extrémité de l'élément (1) filtrant peut être mise en appui.

5. Dispositif (10) de filtration suivant la revendication 1 ou l'une des revendications précédentes, **caractérisé en ce qu'**au point (18) d'entrée du fluide à filtrer et/ou au point (20) de sortie du fluide filtré, est raccordé un robinet (22, 24) d'arrêt, et **en ce qu'**un dispositif de commande, relié à l'appareil (70) de lecture et/ou d'écriture et commandant le robinet (22, 24) d'arrêt, lit, au moyen de l'appareil (70) de lecture et/ou d'écriture, des données dans la mémoire (52) de données de l'élément (1) filtrant, et n'ouvre le robinet (22, 24) d'arrêt et ne met ainsi l'élément (1) filtrant dans le courant de fluide, que si, auparavant, des données pouvant être prescrites ont pu être lues dans la mémoire (52) de données de l'élément (1) filtrant par l'appareil (70) de lecture et/ou d'écriture.

6. Dispositif (10) de filtration suivant la revendication 1 ou l'une des revendications précédentes, **caractérisé en ce que** le corps (12) du filtre peut être fermé par un élément (32) de fermeture et **en ce qu'**au point (18) d'entrée du fluide à filtrer et/ou point (20) de sortie du fluide filtré est raccordé un robinet (22, 24) d'arrêt, et **en ce qu'**un dispositif de commande commandant le robinet (22, 24) d'arrêt contrôle, avant chaque ouverture du robinet (22, 24) d'arrêt, au moyen d'un capteur, la position fermée de l'élément (32) de fermeture et n'ouvre le robinet (22, 24) d'arrêt et ainsi ne met l'élément (1) filtrant dans le courant de fluide, que si, auparavant, il peut être signalé par le capteur que le corps (12) du filtre est fermé.

7. Dispositif (10) de filtration suivant la revendication 1 ou l'une des revendications précédentes, **caractérisé en ce que** l'appareil (70) de lecture et/ou d'écriture a une tête (56) de lecture et/ou d'écriture, qui est disposée à l'intérieur du corps (12) du filtre et **en ce que** des bornes électriques de la tête (56) de lecture et/ou d'écriture passent, au moyen d'une traversée (54) étanche au fluide et étanche à la pression, de l'intérieur du corps (12) du filtre à l'extérieur du corps (12) du filtre.

8. Dispositif (10) de filtration suivant la revendication 1 ou l'une des revendications précédentes, **caractérisé en ce que** l'appareil (70) de lecture et/ou d'écriture est monté sur le dispositif (10) de filtration, notamment sur le corps (12) du filtre.
